## Europäisches Patentamt
## European Patent Office
## Office européen des brevets

(11) Veröffentlichungsnummer: **0 133 650**
**B1**

(12) **EUROPÄISCHE PATENTSCHRIFT**

(45) Veröffentlichungstag der Patentschrift:
28.10.87

(51) Int. Cl.⁴: **B 41 J 19/20,** B 41 J 25/30

(21) Anmeldenummer: 84107713.4

(22) Anmeldetag: 03.07.84

(54) Verfahren und Anordnung zur Positionierung von Druckerwagen, Typenträger o. dgl.

(30) Priorität: 06.07.83 DE 3324386

(43) Veröffentlichungstag der Anmeldung:
06.03.85 Patentblatt 85/10

(45) Bekanntmachung des Hinweises auf die Patenterteilung:
28.10.87 Patentblatt 87/44

(84) Benannte Vertragsstaaten:
CH DE FR GB IT LI NL SE

(56) Entgegenhaltungen:
DE - A - 2 743 896
DE - B - 2 016 877
DE - C - 2 825 761

(73) Patentinhaber: **Siemens Aktiengesellschaft Berlin und München, Wittelsbacherplatz 2, D-8000 München 2 (DE)**

(72) Erfinder: **Heider, Ulrich, Dr.-Ing., Buchauerstrasse 13, D-8000 München 71 (DE)**

## Beschreibung

Die Erfindung betrifft ein Verfahren und eine Anordnung zur Positionierung von Druckerwagen, Typenträgern o.dgl. gemäss dem Oberbegriff der Patentansprüche 1 und 5.

Bei Druckeinrichtungen wie Speicherschreibmaschinen o.dgl. ist es allgemein üblich, den den Druckkopf tragenden Druckerwagen und bei der Verwendung von Typenscheiben als Typenträger, die Typenscheiben über Schrittmotoren anzutreiben und zu positionieren.

Zur Positionierung des Druckerwagens und der Typenscheiben wird die Abdruckposition schrittweise angesteuert, wobei die zu erzielende Druckgeschwindigkeit von der Anzahl und damit der Grösse der Einzelschritte abhängt. Das bedeutet je grösser die Schrittlänge und damit der Schrittwinkel des antreibenden Schrittmotors gewählt wird, umso schneller kann das angetriebene Druckmittel positoniert werden. Dem entgegen steht die Forderung nach einer möglichst kleinen Schrittweite, um eine möglichst exakte und genaue Positionierung zum Erzielen z.B. einer hohen Schriftqualität zu erreichen.

Es ist weiterhin üblich, zwischen dem Schrittmotor und dem eigentlichen anzutreibenden Druckmittel ein Getriebe vorzusehen, das den vorgegebenen Schrittwinkel des Schrittmotors untersetzt. Eine zu hohe Untersetzung hat jedoch auch Nachteile, da sie einerseits die Ansteuer- und damit die Positionierzeit erhöht, und andererseits in Folge des dem getriebeeigenen Spieles eine Untersetzung über einen bestimmten Grad hinaus nicht sinnvoll ist.

Aus der DE-PS 28 25 761 ist der Antrieb eines Druckerwagens über zwei Motoren bekannt, wobei jeder Motor für einen Schrittwinkel α ausgelegt ist und durch getrennte Ansteuerung unabhängig vom anderen Motor halbe Schritte ausführen kann, wenn die Schrittmotoren um eine halbe Raststellung versetzt angeordnet sind. Damit ist es möglich, den kleinsten Schrittwinkel des Motors ohne zusätzliches Getriebe zu halbieren. Alternativ dazu können aber auch die Schrittmotoren gleichzeitig synchron angesteuert werden.

Bei den darin beschriebenen Schrittmotoren unterscheidet man zwischen elektrisch gesteuerten Zwischenraststellungen, den sogenannten «Halbschritten» mit geringerem Haltemoment, bei denen z.B. drei Motorphasen derart angesteuert werden, dass sich die Polflächen von Rotor und Stator nicht direkt gegenüberstehen, sondern um eine halbe Teilung versetzt sind und andererseits sogenannten «Vollschritten» nämlich Raststellungen mit erhöhtem Haltemoment. In der beschriebenen Patentschrift sind die Motore derart angeordnet, dass immer einer der beiden Motoren eine dem Vollschritt entsprechende Stellung einnimmt, während der andere Motor eine dem Halbschritt entsprechende Stellung einnimmt. Dadurch soll beim Fortschalten in jeder Lage der gleiche Zustand erreicht werden. Jeder Motor positioniert dabei den Druckerwagen auf dieselbe Stelle.

Es ist weiters aus der DE-AS 20 16 877 ein Schrittantrieb für schreibende Büromaschinen bekannt, bei der auf einer den Druckwagen antreibenden Welle zwei unabhängig voneinander ansteuerbare mechanisch gekoppelte Schrittmotoren angeordnet sind. Dabei dient ein Schrittmotor als Schrittverschiebemotor und der andere als ein in entgegengesetzter Richtung wirkender Gegenkraftschrittmotor, der zum sanften Abbremsen des Druckerwagens in die Druckposition verzögert angesteuert wird.

Gegenstand der deutschen Offenlegungsschrift 27 43 896 ist ein Schreibgerät, bei dem gemäss Seite 24, Zeilen 1 bis 17 bei der Funktion des Schreibgerätes im Start-Stop-Betrieb die Last vom zweiten Servomotor abgehängt und an diesen etwa in der Mitte eines zuletzt gedruckten Zeichens Versorgungsspannung angelegt wird, wenn kein weiteres Zeichen unmittelbar darauf folgt. Durch dieses Anlegen der Versorgungspannung kann der bewegte Schreibkopf innerhalb einer halben Zeichenbreite angehalten werden. Dabei handelt es sich nicht um ein Verfahren zur Positionierung des Schreibkopfes, sondern um ein Geschwindigkeitssteuerungsprinzip um den Schreibkopf im Start-Stop-Betrieb möglichst schnell anhalten zu können.

Aufgabe der Erfindung ist es, ein Verfahren und eine Anordnung zur schrittweisen Positionierung von Druckerwagen der eingangs genannten Art anzugeben, das bei hoher Positioniergeschwindigkeit auch eine Feinpositionierung des Wagens ermöglicht, die kleiner ist als ein Schritt der Schrittmotoren.

Diese Aufgabe wird bei einem Verfahren und einer Anordnung der eingangs genannten Art gemäss dem kennzeichnenden Teil des ersten und fünften Patentanspruches gelöst.

Weitere vorteilhafte Ausführungsformen der Erfindung sind in den Unteransprüchen gekennzeichnet.

Gemäss der Erfindung wird zur exakten Positionierung z.B. eines Druckerwagens über die erforderliche Ansteuereinrichtung für beide Schrittmotoren gegebenenfalls zunächst eine Grobpositionierung durch synchrones Ansteuern beider Schrittmotoren vorgenommen. Dies kann sowohl durch Halb- als auch durch Vollschritte erfolgen. Zur Feinpositionierung innerhalb des einem einzigen Winkelschritts zugeordneten Schrittvorschubes wird über die Ansteuereinrichtung ein Schrittmotor ein Winkelschritt weiter geschaltet, während der andere Schrittmotor in seiner alten Position gehalten wird. Damit ergibt sich eine Positionierung zwischen der neuen Position des einen Schrittmotors und der ursprünglichen Position des anderen Schrittmotors, wobei eine weitere Feineinstellung durch Steuerung des die Haltemomente der Schrittmotoren hervorrufenden Spulenstromes erfolgt.

Soll allein der Winkelschritt halbiert werden, so kann bei Aufrechterhaltung der Spulenbestromung auf eine Ausregelung des Spulenstromes selbst verzichtet werden.

Durch ein derartiges Verfahren lässt sich stufenlos jede Position innerhalb des vorgegebenen Einzelvorschubes ansteuern. Dies ermöglich z.B. in einfacher Weise die Erzeugung von Fettschrift oder von Proportionalschrift.

Bei der Erzeugung von Fettschrift wird zunächst durch Grobpositionierung bei gleichzeitiger Ansteuerung beider Schrittmotoren die Druckposition des Druckerwagens angesteuert. Nach Abdruck der Einzeltype erfolgt ein Versatz des Druckerwagens entsprechend dem erfinderischen Verfahren, wobei die Versatzbreite, die geringer ist als eine einzelne Strichbreite, dadurch erreicht wird, dass nur ein Schrittmotor weitergeschaltet wird und dann die Ausregelung auf den vorgesehenen Versatz durch Änderung der Höhe des Spulenstromes in den Motoren des Druckerwagenantriebes vorgenommen wird.

Fig. 1 zeigt eine schematische Darstellung einer Anordnung zur Durchführung des erfindungsgemässen Verfahrens,

Fig. 2 zeigt eine schematische Darstellung des Momentverlaufes über den Drehwinkel der Motoren für den Fall, bei dem beide Motoren mit dem gleichen Spulenstrom beaufschlagt sind,

Fig. 3 zeigt eine Darstellung entsprechend der Fig. 2, bei der die Motoren mit unterschiedlichen Spulenströmen beaufschlagt sind und

Fig. 4 zeigt eine der Fig. 3 entsprechende Darstellung, bei der ebenfalls die Motoren mit unterschiedlichen Spulenströmen beaufschlagt sind.

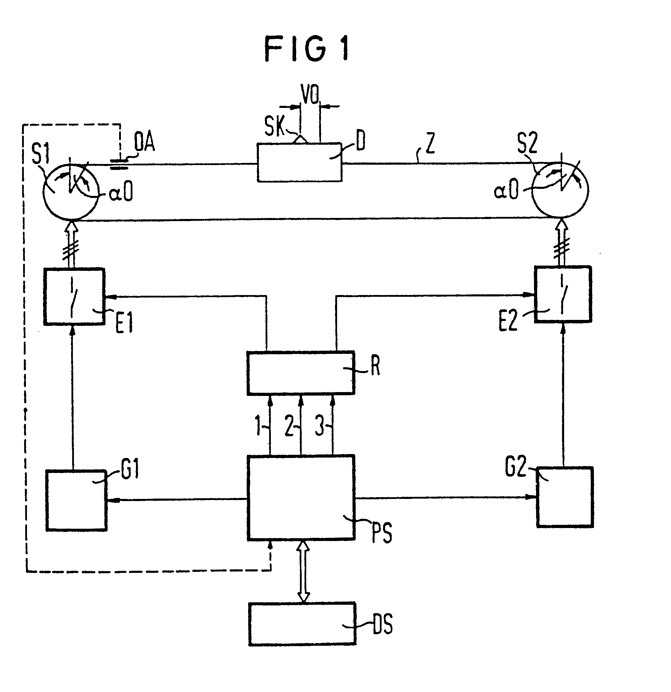

Bei der in der Fig. 1 dargestellten Anordnung zum Antrieb eines Druckerwagens in einer Druckeinrichtung, z.B. einer Speicherschreibmaschine, sind zwei Schrittmotoren S1 und S2 angeordnet, die über ein Übertragungsglied, in diesem Falle einem Zahnriemen Z, mit dem Druckerwagen D in Verbindung stehen und diesen im Betrieb zeilenweise entlang einem Aufzeichnungsträger bewegen. Die Motoren S1 und S2 sind hinsichtlich des Zahnriemens Z so eingestellt, dass jeder Motor den Druckerwagen D auf dieselbe Stelle positioniert. Bei einer Verdrehung der Motoren S1 und S2 um den Winkel $\alpha_o$ bewegt sich der Druckerwagen um eine Vorschubstrecke VO. Angesteuert werden die Schrittmotoren S1 und S2 über eine Schaltungsanordnung, die hier nur schematisch dargestellt ist. Sie enthält in üblicher Weise elektronische Schalter E1 und E2, die die Anschlussleitungen des Schrittmotors in einem vorgeschriebenen logischen Zyklus mit geregelten Gleichstromquellen G1 und G2 verbinden. Diese Leistungselektronik wirkt in bekannter Weise als Wechselrichter. Angesteuert werden die Schalter über einen Ringzähler R, der die Reihenfolge bestimmt, in der die Umschalter des Wechselrichters betätigt werden. Zu diesem Zwecke wird der Ringzähler R von einer Programmsteuereinheit PS mit im wesentlichen drei Impulsketten beaufschlagt und zwar mit den Steuerimpulsen 1, die die Zeitpunkte der Schalterbetätigungen definieren, der Drehrichtungsangabe 2 für die Schrittmotoren S1, S2 und über die Steuerleitung 3, die Steuerinformation darüber welcher der beiden Motoren S1 und S2 angesteuert werden sollen. Die Programmsteuerung PS steht ausserdem mit den geregelten Gleichstromquellen G1 und G2 in Verbindung, über die der Spulenstrom in den einzelnen Motoren festgelegt wird. Die Synchronisierposition des Druckerwagens D kann z.B. über einen in üblicher Weise aufgebauten optischen Abtaster OA der Programmsteuerung PS rückgemeldet werden.

Die Programmsteuerung PS selbst wiederum steht mit der eigentlichen Druckersteuerung DS, die z.B. eine mikroprozessorgesteuerte Druckersteuerung der bekannten Art sein kann, in Verbindung.

Die Funktion der Schaltungsanordnung wird nun im folgenden anhand der Diagramme 2 bis 4 erläutert. Bei den Diagrammen stellt die Kurve MS1 den Verlauf des Motormomentes am Schrittmotor S1 dar, die Kurve MS2 den Verlauf des Motormomentes am Schrittmotor S2 und die Kurve GM das aus der Überlagerung der beiden Motoren resultierende Gesamtmoment GM.

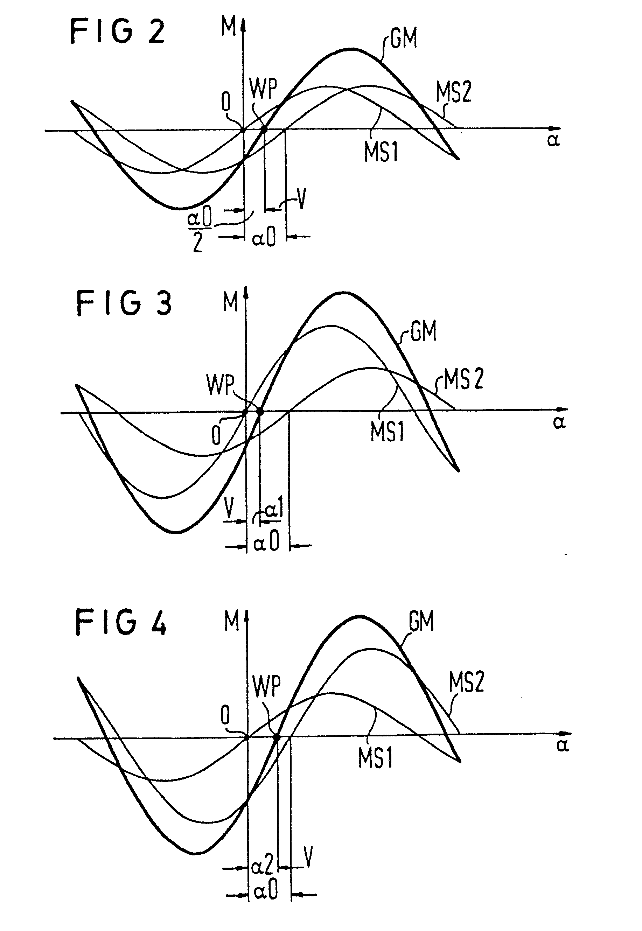

Werden nun die beiden Schrittmotoren S1 und S2 über die Programmsteuerung PS und die zugehörigen Gleichstromquellen G1, G2 bzw. die Schalter E1 und E2 mit demselben Spulenstrom beaufschlagt, so haben die Motoren S1 und S2 gleich grosse Motormomente MS1 und MS2. In diesem Fall kommen die Momentkurven MS1 und MS2 zur Deckung und der Wagen wird bei 0 (Fig. 2) positioniert. (Aus Übersichtsgründen wird in der Fig. 2 auf die Darstellung dieser Deckungskurve verzichtet). Wird nun der Motor S1 entsprechend der Fig. 2 in seiner Position durch Beibehaltung der Schalterstellung E1 festgehalten und der Motor S2 durch Veränderung der Schalterstellung E2 um einen Winkel $\alpha_o$ weitergeschaltet, dann befindet sich der Druckerwagen D am Orte WP (Wagenposition) in einer stabilen Gleichgewichtslage zwischen den beiden gegeneinander arbeitenden Motoren, was einem Wagenvorschub V entspricht, der halb gross ist, wie der Wagenvorschub entsprechend der Fig. 1, bei dem die Motoren S1 und S2 synchron um den Winkel $\alpha_o$ weitergeschaltet worden sind. Durch dieses einseitige Festhalten eines Motors und Weiterschalten des anderen Motors, lässt sich bei Beibehaltung des Spulenstromes der Winkelschritt und damit der Wagenvorschub V halbieren, was zur Feinpositionierung des Druckerwagens nach einer Grobpositionierung mit Synchronlauf der beiden Motoren S1 und S2 verwendet werden kann.

Eine weitere Möglichkeit der Feinpositionierung ergibt sich durch die Regelung des Spulenstromes in den Schrittmotoren S1 und S2 über die geregelten Gleichstromquellen G1 und G2. Wird z.B. entsprechend der Fig. 3 der Motor S2 um einen Winkelschritt $\alpha_o$ weitergeschaltet, bei Beibehaltung der Position des Motors S1 und bei gleichzeitiger Veränderung der Spulenströme, dann wird der Druckerwagen D in Abhängigkeit der unterschiedlichen Motormomente im S1 und S2 seine Gleichgewichtslage WP entsprechend der Wagenposition in einen Winkelbereich des Winkels $\alpha_o$, nämlich entsprechend dem Winkel $\alpha 1$ der einem Wagenvorschub V bewirkt, einnehmen.

Bei der Darstellung der Fig. 4 wurde der Motor S2 weitergeschaltet und die Position des Motors S1 beibehalten wobei auch hier durch Beaufschlagung der Schrittmotoren mit verschiedenen Spulenströmen ein unterschiedliches Motormoment erzeugt wurde, was zu einer Gleichgewichtslage WP (Wagenposition) entsprechend dem Winkel $\alpha2$ führt.

Durch diese Veränderung eines oder beider Spulenströme bei gleichzeitiger unterschiedlicher Ansteuerung der Motoren S1 und S2 ist es möglich, ohne zusätzliches Getriebe nicht nur allein den Wagenvorschub hinsichtlich der vorgegebenen Einzelschritte zu halbieren, wie bei der Darstellung der Fig. 2, sondern den Druckerwagen D stufenlos in jeder gewünschten Stellung zu positionieren.

Der Wagenvorschub V lässt sich dabei aus den bekannten Beziehungen für überlagerte hormonische Schwingungen errechnen: Dabei bezeichnet der Winkel $\alpha$ den Winkel, der der Gleichgewichtswagenposition WP des Wagens entspricht, der kleiner oder höchstens gleich dem Winkelschritt $\alpha0$ sein kann. Mit MS1max ist dabei das maximale Motormoment des Schrittmotors S1 und mit MS2max das maximale Motormoment des Schrittmotors S2 bezeichnet. $\alpha0$ bezeichnet in diesem Fall den Schrittwinkel des Motors (Vollschritt) oder auch jeden anderen quasistatischen Schritt (z.B. Halbschritt)

$$tg\ \alpha = \frac{MS2\ max \times \sin \alpha0}{MS1\ max + MS2\ max \cos \alpha0}$$

Unter der Annahme, dass der Wagenvorschub V porportional zum Winkel $\alpha$ ist und der Spulenstrom I1, I2 in den Schrittmotoren zu den maximalen Motormomenten ergibt sich die folgende Beziehung

$$tg\ v \sim \frac{I2 \sin \alpha0}{I1 + I2 \cos \alpha0}$$

für den Sonderfall, dass die Spulenströme I1, I2 in den Schrittmotoren S1 und S2 entsprechend der Darstellung der Fig. 2 gleich gross sind, erhält man die Beziehung

$$tg\ v \sim \frac{\sin \alpha0}{1 + \cos \alpha0} = tg\ \frac{\alpha0}{2} \qquad v \sim \frac{\alpha0}{2} = \frac{vo}{2}$$

Durch die erfindungsgemässe Positionierung ergibt sich eine einfache Möglichkeit, Fettschrift mit der Druckeinrichtung zu erzeugen. Zu diesem Zwecke erfolgt zunächst eine Grobpositionierung, durch synchrone Ansteuerung der beiden Schrittmotoren S1 und S2, um einen Abdruck eines Zeichens zu erzeugen. Dann wird der Wagen durch Feinpositionierung entsprechend den Diagrammen der Fig. 3 und 4 oder, bei entsprechend geringem Schrittwinkel, auch entsprechend dem Diagramm der Fig. 2 um einen Wagenvorschub weitergeschaltet, der kürzer ist als eine Strichbreite des dargestellten Zeichens.

Analog dazu lässt sich das beschriebene Verfahren verwenden, um Proportionalschrift zu erzeugen, d.h. die Abstände zwischen den abzudruckenden Zeichen in Abhängigkeit von der Zeichenbreite zu variieren.

## Patentansprüche

1. Verfahren zur Positionierung von Druckerwagen (D), Typenträger od. dgl. in schreibenden Büromaschinen unter Verwendung von zwei über ein Zugmittel (7) miteinander drehfest zwangsgekoppelten Schrittmotoren (S1, S2), die über eine Ansteuereinrichtung (PS) entweder synchron oder jeweils getrennt ansteuerbar sind, dadurch gekennzeichnet, dass über die Ansteuereinrichtung (PS) nach einer bedarfsweisen Grobpositionierung durch synchrones Ansteuern beider Schrittmotoren (S1, S2) eine Feinpositionierung durch Weiterschalten eines Schrittmotors um einen oder mehrere Schritte bei Beibehaltung der Positionierung des anderen Schrittmotors und bedarfsweise durch Steuerung der Haltemomente (MS1, MS2), der Schrittmotore (S1, S2) über deren Spulenstromgrösse (I) erfolgt.

2. Verfahren nach Anspruch 1, dadurch gekennzeichnet, dass zum Halbieren des einem Winkelschritt $(\alpha_o)$ der Schrittmotore (S1, S2) zugeordneten Vorschubs $V_0$), bei Beibehaltung des ursprünglichen Spulenstromes (I) eines Schrittmotors (S1, S2), der andere Schrittmotor (S2, S1) um einen Schrittwinkel $(\alpha_o)$ weitergeschaltet wird.

3. Verfahren nach einem der Ansprüche 1 oder 2, dadurch gekennzeichnet, dass zum Erzeugen von Fettschrift zunächst nach Grobpositionierung des Druckerwagens (D) und/oder des Schreibkopfes (SK) ein erster Abdruck erzeugt wird, und dass dann nach Vorschub des Druckerwagens (D) und/oder des Schreibkopfes (SK) durch Feinpositionierung in Abhängigkeit der verwendeten Strichbreite des abzudruckenden Zeichens, mindestens ein weiterer Abdruck erfolgt.

4. Verfahren nach einem der Ansprüche 1 oder 2, dadurch gekennzeichnet, dass zur Erzeugung von Proportionalschrift der Druckerwagen (D) und/oder der Schreibkopf (SK) in Abhängigkeit vom nächsten abzudruckenden Zeichen grob und/oder fein positioniert wird.

5. Anordnung zur Positionierung von Druckerwagen (D), Typenträger o.dgl. in schreibenden Büromaschinen, unter Verwendung von zwei über ein Zugmittel (Z) miteinander drehfest zwangsgekoppelten Schrittmotoren (S1, S2) mit zugeordneten Schalteinrichtungen (E1, E2) und Gleichstromquellen (G1, G2), die über eine, ein Steuerteil für die Schalteinrichtungen und eine Programmsteuerung (PS) aufweisende Ansteuereinrichtung jeweils getrennt ansteuerbar sind, dadurch gekennzeichnet, dass die Gleichstromquellen (G1, G2) über die Programmsteuerung (PS) in der Grösse ihres Ausgangsstromes getrennt steuerbar sind, und dass die Programmsteuerung (PS) zur Durchführung einer Feinpositionierung über die entsprechend ausgebildete Steuereinheit (Ringzähler R), einen Schrittmotor (S1, S2) durch Beaufschlagung mit einem ent-

sprechenden Ansteuermuster einen Winkelschritt $\alpha_o$ weiterschaltet, während sie das bisherige Ansteuermuster für den anderen Schrittmotor (S2, S1) beibehält und bedarfsweise zur Momentsteuerung die Schrittmotoren (S1, S2) über die Gleichstromquellen (G1, G2) mit von der Länge der vorzusehenden Feinpositionierung abhängigen, unterschiedlichen Strömen beaufschlagt.

## Revendications

1. Procédé pour positionner des chariots d'impression (D), des supports de caractères ou analogues dans des machines à écrire de bureau, moyennant l'utilisation de deux moteurs pas-à-pas (S1, S2), qui sont reliés entre eux selon un couplage forcé avec blocage mutuel en rotation par l'intermédiaire d'un dispositif de traction (Z) et peuvent être commandés soit de façon synchrone, soit respectivement séparément, par l'intermédiaire d'un dispositif de commande (PS), caractérisé par le fait qu'après un éventuel positionnement approché, on réalise par l'intermédiaire du dispositif de commande (PS) et au moyen d'une commande synchrone des deux moteurs pas-à-pas (S1, S2), un positonnement précis au moyen de l'avance d'un moteur pas-à-pas sur un ou plusieurs pas, tout en conservant le positionnement de l'autre moteur pas-à-pas et éventuellement au moyen d'une commande des couples d'arrêt (MS1, MS2) des moteurs pas-à-pas (S1, S2), par l'intermédiaire des intensités (I) des courants circulant dans leurs enroulements.

2. Procédé suivant la revendication 1, caractérisé par le fait que pour diviser de moitié l'avance ($V_0$) associée à un pas angulaire ($\alpha_o$) des moteurs pas-à-pas (S1, S2), tout en conservant le courant initial (I) circulant dans l'enroulement d'un moteur pas-à-pas (S1, S2), on fait avancer l'autre moteur pas-à-pas (S2, S1) d'un pas angulaire ($\alpha_o$).

3. Procédé suivant l'une des revendications 1 ou 2, caractérisé par le fait que pour produire une écriture en caractères gras, on réalise tout d'abord une première impression après le positionnement approché du chariot d'impression (D) et/ou de la tête d'impression (SK), et qu'on réalise au moins une autre impression après l'avance du chariot d'impression (D) et/ou de la tête d'impression (SK), au moyen d'un positionnement précis, en fonction de la largeur de trait utilisée du caractère devant être imprimés.

4. Procédé suivant l'une des revendications 1 ou 2, caractérisé par le fait que pour produire une impression proportionnelle, on réalise un positionnement approché et/ou précis du chariot d'impression (D) et/ou de la tête d'impression (SK), en fonction du caractère immédiatement suivant devant être imprimé.

5. Montage pour positionner des chariots d'impression (D), des supports de caractères ou analogues dans des machines à écrire de bureau, moyennant l'utilisation de deux moteurs pas-à-pas (S1, S2), qui sont reliés entre eux selon un couplage forcé avec blocage mutuel en rotation par l'intermédiaire d'un dispositif de traction (Z) et auxquels sont associés des dispositifs de commutation (E1, E2) et des sources de courant continu (Z1, Z2), qui peuvent être commandés séparément par l'intermédiaire d'un dispositif de commande comportant une partie de commande pour les dispositifs de commutation et un dispositif de commande à programme (PS), caractérisé par le fait que les intensités des courants de sortie des sources de courant continu (G1, G2) peuvent être commandés séparément par l'intermédiaire du dispositif de commande à programme, et que, pour l'exécution d'un positionnement précis par l'intermédiaire de l'unité de commande (compteur annulaire Z) réalisée de façon correspondante, le dispositif de commande à programme (PS) fait avancer un moteur pas-à-pas (S1, S2), d'un pas angulaire ($\alpha_o$), en le chargeant avec un profil de commande correspondant, tandis que le dispositif de commande retient le profil de commande, jusqu'alors présent, pour l'autre moteur pas-à-pas (S2, S1) et, éventuellement pour réaliser la commande des couples, charge les moteurs pas-à-pas (S1, S2), par l'intermédiaire des sources de courant continu (G1, G2), par des courants différents qui dépendent de la longueur du positionnement précis devant être prévu.

## Claims

1. A method of positioning printer carriages (D), type carriers or the like in office printers using two stepping motors (S1, S2), which are positively coupled to one another via a tension means (Z) so as to be rotation-resistant and which can be separately driven via a drive device (PS) either synchronously or separately, characterised in that via the drive device (PS), after any necessary coarse positioning by driving the two stepping motors (S1, S2) in synchronism. a fine positioning is carried out by further stepping of one stepping motor by one or more steps, while maintaining the position of the other stepping motor, and where necessary by controlling the holding moments (MS1, MS2) of the stepping motors (S1, S2) via their coil current value (I).

2. A method as claimed in Claim 1, characterised in that in order to halve the advance ($V_o$) assigned to an angular step ($\alpha_o$) of the stepping motors (S1, S2) the original coil current (I) of one stepping motor (S1, S2) is maintained while the other stepping motor (S2, S1) is stepped on by one angular step ($\alpha_o$).

3. A method as claimed in one of the Claims 1 or 2, characterised in that in order to produce bold-face script, following the coarse positioning of the printer carriage (D) and/or of the printer head (SK) a first print-out takes place, and that then, following the advance of the printer carriage (D) and/or of the printer head (SK), by fine positioning in dependence upon the stroke width of the character which is to be printed, at least one further print-out takes place.

4. A method as claimed in one of the Claims 1 or 2, characterised in that in order to produce proportional script, the printer carriage (D) and/or the printer head (SK) is coarse and/or fine positioned in dependence upon the next character which is to be printed.

5. An arrangement for positioning a printer carriage (D), type carrier or the like in office printers, using two stepping motors (S1, S2) which are positively coupled to one another via a tension means (Z) so as to be rotation-resistant, with assigned switching devices (E1, E2) and d.c. current sources (G1, G2) which can each be controlled separately via a drive device which comprises a control component for the switching devices and a programme control unit (PS), characterised in that the d.c. current sources (G1, G2) can be controlled separately by the programme control unit (PS) in respect of the magnitude of their output current and that in order to carry out fine positioning via the appropriately designed control unit (ring counter R) the programme control unit (PS) advances one stepping motor (S1, S2) by an angular step ($\alpha_o$) by supplying it with an appropriate drive pattern, whereas it retains the existing drive pattern for the other stepping motor (S2, S1) and where necessary for instantaneous control supplies the stepping motors (S1, S2) via the d.c. current sources (G1, G2) with different currents which depend upon the length of the fine positioning which is to be carried out.

# FIG 1

FIG 2

FIG 3

FIG 4